# EUROPEAN PATENT APPLICATION

(11) **EP 4 383 286 A1**
(43) Date of publication of application: **12.06.2024**
(21) Application number: 22868909.7
(22) Date of filing: 12.08.2022
(51) Int. Cl.: H01F 27/24, H01F 38/14

(54) **TRANSMITTING END MAGNETIC CORE AND PREPARATION METHOD THEREFOR**

(30) Priority: 18.09.2021 CN 202111098196
(71) Applicant: Hengdian Group DMEGC Magnetics Co., Ltd, Jinhua, Zhejiang 322118 (CN)
(72) Inventor: LU, Feixiang, Jinhua, Zhejiang 322118 (CN); WU, Yuejie, Jinhua, Zhejiang 322118 (CN); CHEN, Jiawei, Jinhua, Zhejiang 322118 (CN); DU, Jiahao, Jinhua, Zhejiang 322118 (CN); HUANG, Qingchun, Jinhua, Zhejiang 322118 (CN)
(74) Representative: De Bonis, Paolo
(86) International application number: PCT/CN2022/111971
(87) International publication number: WO 2023/040533

(57) **Abstract**

Disclosed herein are a transmitting end magnetic core and a preparation method therefor. The transmitting end magnetic core comprises a magnetic core body, the magnetic core body being a flat disk structure; a winding center column is disposed on an end surface of one side of the magnetic core body, the winding center column being used for winding a magnetic induction coil; a winding groove is penetratingly disposed on the magnetic core body, one end of the winding groove being located on the winding center column or the magnetic core body, and the other end penetrating through the edge of the magnetic core body; an outer wall is circumferentially arranged at the edge of the end surface of the same side of the magnetic core body as the winding center column, at least one of two end portions of the outer wall along the circumferential direction of the magnetic core body disposed separated from the winding groove; and the end surface of the magnetic core body is smoothly connected to the side surface of the magnetic core body. The end surface of the magnetic core body of the transmitting end magnetic core disclosed in the present application is smoothly connected to the side surface of the magnetic core body, so that no damage is caused to an insulation layer of a wire; this eliminates a positioning groove on the back surface of the magnetic core body, simplifying a processing technique for the transmitting end magnetic core, and improving the yield of the transmitting end magnetic core.

## Description

### TECHNICAL FIELD

Embodiments of the present application relate to the technical field of manufacturing methods for transmitting-end magnetic cores, and for example, a transmitting-end magnetic core and a manufacturing method therefor.

### BACKGROUND

With the development of electronic communications, wireless charging technology is increasingly improved to realize the convenience and fashion of charging; most of the electronic products support wireless charging, and the manufacturers of mobile phone, the most common one among electronic products, have basically treated wireless charging as a standard configuration for mobile phone. As the modern electronic products are developing towards the direction of small, thin and light, their internal structures will be designed more and more compactly. In order to meet the growing demand for more convenient and more efficient consumption, the receiving end is required to be thin, for which the thin film used mostly is made of amorphous nanocrystalline materials at present; the transmitting end is allowed to have a certain volume, and the transmitting-end magnetic core is generally made of ferrite materials in the art considering the production cost and stability.

The production process of the transmitting-end magnetic core made of ferrite generally includes: assembling a mold on a dry powder pressing machine (shortened to press), exerting pressure on powders by controlling the mold through the press to process the powders into a green body having a shape and a strength, sintering the green body in a furnace having a certain temperature and an oxygen concentration to obtain a sintered body, and then grinding the sintered body for heights, so as to obtain the magnetic core with required sizes.

Patent CN112420358A discloses a magnetic core and a manufacturing method for the magnetic core, wherein the structure of such magnetic core not only has the possibility of wearing out the insulating layer of the wire, but also has certain requirements for the depth and width of the positioning slot, which is arranged for the receiving end of wireless charging to inset and connect and accordingly realizes the positioning of the receiving end of wireless charging, thereby affecting the overall yield rate of the magnetic core.

### SUMMARY

The following is a summary of the subject matter described in detail herein. This summary is not intended to limit the protection scope of the claims.

An embodiment of the present application provides a transmitting-end magnetic core and a manufacturing method therefor, which has the advantages of simple structure, no damage to the wire and high yield rate.

A transmitting-end magnetic core comprises a magnetic core body, wherein the magnetic core body has a flat disc structure; a coil-winding center post which is disposed on an end-face of one side of the magnetic core body, wherein the coil-winding center post is used for winding an induction coil; a coil-winding slot which is disposed through the magnetic core body, wherein one end of the coil-winding slot is positioned on the coil-winding center post or the magnetic core body, and the other end passes through an edge of the magnetic core body; an outer wall which is circumferentially disposed at the edge of the magnetic core body on the end-face of the same side where the coil-winding center post is disposed, wherein at least one of two ends of the outer wall around the magnetic core body is spaced apart from the coil-winding slot, and the end-face and a side-face of the magnetic core body are joined smoothly.

As a preferred solution of the transmitting-end magnetic core, a chamfer is circumferentially disposed at the edge of the magnetic core body on a side facing away the coil-winding center post, and the chamfer is disposed opposite to the outer wall.

A manufacturing method for the transmitting-end magnetic core according to any one of the above technical solutions comprises:
S1. determining a mold shrinkage ratio n with a design mold for the transmitting-end magnetic core by using a pressing method where the coil-winding center post of the transmitting-end magnetic core is arranged with the face upwards;
S2. pressing powders to form a green body, wherein a height of the green body is 5.5 mm-8 mm;
S3. sintering the green body in a furnace to form a sintered body; and
S4. grinding the sintered body on a grinder, wherein during the grinding, firstly, a height of the coil-winding center post is allowed to reach a first preset height through grinding, and then a sum of the height of the coil-winding center post and a thickness of the magnetic core body is allowed to reach a second preset height through grinding, and at the same time, the thickness of the magnetic core body is allowed to reach a third preset height through grinding, wherein the first preset height, the second preset height and the third preset height are the corresponding heights of the transmitting-end magnetic core to be processed.

As a preferred solution of the manufacturing method for a transmitting-end magnetic core, after S4, the transmitting-end magnetic core after the grinding is sprayed with an insulating layer, and a thickness of the insulating layer is 5 µm-35 µm.

As a preferred solution of the manufacturing method for a transmitting-end magnetic core, the design mold comprises: a female mold, wherein a through slot and a positioning slot are defined in the female mold and are both extending along the axial direction of the female mold; an upper mold, wherein a lower end of the upper mold is placed into the through slot and is provided with a first positioning protrusion corresponding to the positioning slot, a center post recess used to form the coil-winding center post, a coil-winding protrusion used to form the coil-winding slot, and a forming recess to form the outer wall; and a lower mold, wherein an upper end of the lower mold is placed into the through slot and is provided with a center protrusion, and a second positioning protrusion corresponding to the positioning slot, and the lower mold, the upper mold and the female mold enclose a mold cavity for the formation of the green body, and a height of the center protrusion is 1.5 mm-4.14 mm.

As a preferred solution of the manufacturing method for a transmitting-end magnetic core, a depth of the forming recess is not less than a depth of the center post recess and the difference between those two is not less than 1 mm, and a height of the coil-winding protrusion is not less than the product of the thickness of the magnetic core body after the grinding and the mold shrinkage ratio and the difference between those two is less than or equal to 0.6 mm.

As a preferred solution of the manufacturing method for a transmitting-end magnetic core, the chamfer is circumferentially disposed at the edge of the magnetic core body on the side facing away the coil-winding center post, the chamfer is disposed opposite to the outer wall, the through slot comprises a first connecting slot and a second connecting slot, a diameter of the second connecting slot is less than a diameter of the first connecting slot, the lower end of the upper mold is placed into the first connecting slot, the upper end of the lower mold is placed into the second connecting slot, the first connecting slot and the second connecting slot are connected by a connecting bevel, and the connecting bevel is used for forming the chamfer.

As a preferred solution of the manufacturing method for a transmitting-end magnetic core, a distance from a bottom end of the connecting bevel to a top end of the mold cavity = (the thickness of the magnetic core body after the grinding + the height of the coil-winding center post + grinding amounts of two end-faces of the sintered body + 0.25) * n

As a preferred solution of the manufacturing method for a transmitting-end magnetic core, a first draft angle formed by a side wall of the center post recess with the vertical plane is 4°-10°, and a second draft angle formed by a side wall of the forming recess with the vertical plane is 2°-8°.

As a preferred solution of the manufacturing method for a transmitting-end magnetic core, the difference between a density of the magnetic core body and a density of the coil-winding center post is less than or equal to 0.03 g/cm³, and a density of a portion of the green body, which faces the coli-winding protrusion, is less than or equal to 0.15 g/cm³.

The beneficial effects of the embodiments of the present application: for the transmitting-end magnetic core disclosed by the embodiments of the present application, the end-face and the side-face of the magnetic core body are joined smoothly, which will not cause damage to the insulating layer of the wire, and a positioning slot on the back side of the magnetic core body is eliminated, which simplifies the processing technology of the transmitting-end magnetic core and improves the yield rate of the transmitting-end magnetic core.

The manufacturing method for a transmitter-end magnetic core disclosed by the present application is characterized by simple process and high yield rate.

Other aspects can become apparent upon reading and understanding the drawings and the detailed description.

### BRIEF DESCRIPTION OF DRAWINGS

In order to more clearly illustrate the technical solutions in the examples of the present application, the drawings to be used in the description of the examples of the present application will be briefly introduced hereinafter. Obviously, the drawings described below are only some examples of the present application, and those skilled in the art, without any creative efforts, can obtain other drawings based on the examples in the present application and the drawings below.

The drawings are used to provide further understanding of the technical solutions herein, constitute part of the specification, and explain the technical solutions herein in conjunction with the examples in the present application, and have no limitation on the technical solutions herein.
FIG. 1 is a schematic view of a transmitting-end magnetic core provided by Example 1 of the present application in one orientation;
FIG. 2 is a schematic view of the transmitting-end magnetic core provided by Example 1 of the present application in another orientation;
FIG. 3 is a cross-sectional view of the transmitting-end magnetic core provided by Example 1 of the present application;
FIG. 4 is a schematic view of a female mold of a design mold provided by Example 1 of the present application;
FIG. 5 is a schematic view of an upper mold of the design mold provided by Example 1 of the present application;
FIG. 6 is a cross-sectional view of the upper mold of the design mold provided by Example 1 of the present application;
FIG. 7 is a schematic view of a lower mold of the design mold provided by Example 1 of the present application;
FIG. 8 is a schematic view of a green body provided by Example 1 of the present application.

### Reference lists:

11. magnetic core body; 12. coil-winding center post; 13. coil-winding slot; 14. outer wall; 15. chamfer;
2. female mold; 21. through slot; 211. first connecting slot; 212. second connecting slot; 22. positioning slot; 23. connecting bevel;
3. upper mold; 31. first positioning protrusion; 32. center post recess; 33. coil-winding protrusion; 34. forming recess;
4. lower mold; 41. center protrusion; 42. second positioning protrusion;
5. green body.

### DETAILED DESCRIPTION

For a clearer understanding of the technical problems solved, technical solutions adopted and technical effects achieved by the present application, the technical solutions of the examples of the present application will be described below in further detail with reference to the drawings, and it is evident that the described examples are only a part of the examples of the present application but not all of them. Any other examples obtained by those skilled in the art based on the examples in the present application without any creative efforts shall fall within the protection scope of the present application.

In the description of the present disclosure, it should be noted that the terms "center", "upper", "lower", "left", "right", "vertical", "horizontal", "inner", "outer", etc., indicate an orientation or a positional relationship based on an orientation or a positional relationship shown in drawings, which is only used for conveniently describing the present application and simplifying the description, rather than indicating or implying that the device or unit referred to necessarily has a particular orientation or needs to be disposed and operated in a particular orientation, and thereby should not be construed as a limitation to the present application. In addition, the terms "first" and "second" are only used for descriptive purposes, and should not be construed as indicating or implying the relative importance. The terms "first position" and "second position" refer to two different positions.

In the description of the present disclosure, it should be noted that, unless specified or defined otherwise, the terms "mounting", "attaching", and "connecting" should be construed in broad sense, which may be, for example, a fixed connection or a detachable connection; a mechanical connection or an electrical connection; a direct connection, an indirect connection through an intermediate medium, or an internal communication between two units. For those skilled in the art, specific meanings of the above terms in the present application can be understood through specific situations.

### Example 1

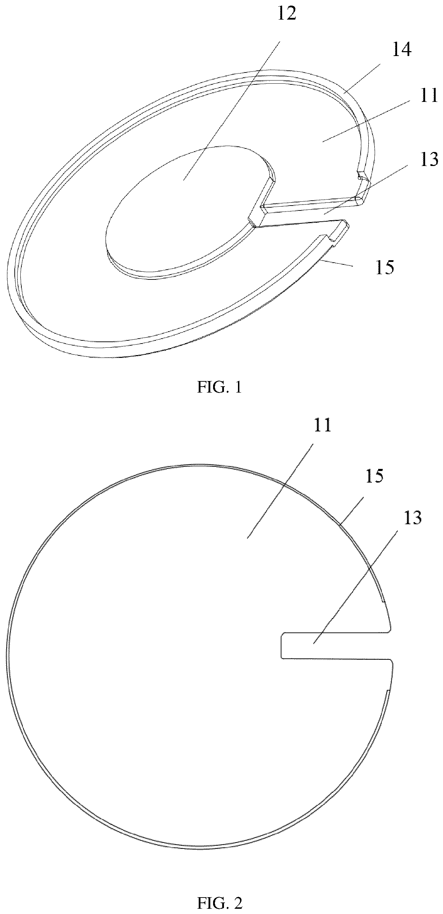

This example provides a transmitting-end magnetic core; as shown in FIGS. 1-3, the transmitting-end magnetic core comprises a magnetic core body 11, wherein the magnetic core body 11 has a flat disc structure; a coil-winding center post 12 which is disposed on an end-face of one side of the magnetic core body 11, wherein the coil-winding center post 12 is used for winding an induction coil; a coil-winding slot 13 which is disposed through the magnetic core body 11, wherein one end of the coil-winding slot 13 is positioned on the coil-winding center post 12, and the other end passes through an edge of the magnetic core body 11; an outer wall 14 which is circumferentially disposed at the edge of the magnetic core body 11 on the end-face of the same side where the coil-winding center post 12 is disposed, wherein two ends of the outer wall 14 around the magnetic core body 11 are both spaced apart from the coil-winding slot 13, and the end-face and a side-face of the magnetic core body 11 are joined smoothly. In another example, maybe, one end of the outer wall 14 around the magnetic core body 11 is spaced apart from the coil-winding slot 13, and the other end is adjacent to the coil-winding slot 13, which is specifically depended on the actual needs. In another example, one end of the magnetic core body 11 is positioned on the magnetic core body 11, and the other end passes through the edge of the magnetic core body 11, which is specifically depended on the actual needs.

For the transmitting-end magnetic core provided by this example, the end-face and the side-face of the magnetic core body 11 are joined smoothly, which will not cause damage to the insulating layer of the wire, and a positioning slot on the back side of the magnetic core body 11 is eliminated, which simplifies the processing technology of the transmitting-end magnetic core and improves the yield rate of the transmitting-end magnetic core.

As shown in FIGS. 1-3, a chamfer 15 is circumferentially disposed at the edge of the magnetic core body 11 in this example on a side facing away the coil-winding center post 12, and the chamfer 15 is disposed opposite to the outer wall 14. In other words, if the outer wall 14 is not disposed on a region of the edge of the magnetic core body 11 on one side, the chamfer 15 will not be disposed on its opposite region on the other side. Specifically, the projection of the chamfer 15 on the lower end-face of the magnetic core body 11 has a width E of 0.10 mm-0.65 mm along the radial direction of the magnetic core body 11 in this example.

Specifically, in this example, an outer diameter R of the transmitting-end magnetic core is 38.6 mm with a tolerance of 0.3 mm, a thickness of the outer wall 14 is 0.88 mm with a tolerance of 0.1 mm, a width D of the coil-winding slot 13 is 2.75 mm with a tolerance of 0.15 mm, a length L the coil-winding slot 13 is within 2.85-21.35 mm, a sum of a thickness of the magnetic core body 11 and a height H₁ of the coil-winding center post 12 is 1.72 mm with a tolerance of 0.1 mm, and the thickness H₂ of the magnetic core body 11 is 1.05 mm with a tolerance of 0.1 mm. In another example, R may be any other value within 25 mm-50 mm with a tolerance of 0.3 mm; the thickness of the outer wall 14 may be any other value within 0.7 mm-1.05 mm with a tolerance of 0.1 mm; D may be any other value within 2 mm-3.25 mm with a tolerance of 0.15 mm; H₁ may be any other value within 1.65 mm-2.1 mm with a tolerance of 0.1 mm; and H₂ may be any other value within 0.7 mm-1.2 mm with a tolerance of 0.1 mm, which is specifically depended on the actual needs.

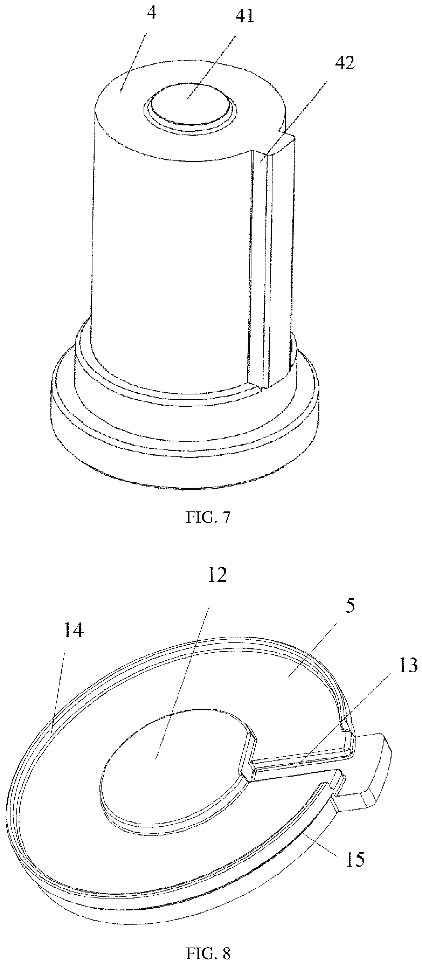

This example also provides a manufacturing method applicable to the transmitting-end magnetic core of this example, comprising:
S1. a mold shrinkage ratio n is determined with a design mold for the transmitting-end magnetic core by using a pressing method where the coil-winding center post (12) of the transmitting-end magnetic core is arranged with the face upwards;
S2. powders are pressed to form a green body 5 as shown in FIG. 8, wherein a height of the green body 5 is 6 mm;
S3. the green body 5 is sintered in a furnace to form a sintered body;
S4. the sintered body is ground on a grinder, wherein during the grinding, firstly, a height of the coil-winding center post 12 is allowed to reach a first preset height through grinding, and then a sum of the height of the coil-winding center post 12 and the thickness of the magnetic core body 11 is allowed to reach a second preset height through grinding, and at the same time, the thickness of the magnetic core body 11 is allowed to reach a third preset height through grinding, wherein the first preset height, the second preset height and the third preset height are the corresponding heights of the transmitting-end magnetic core to be processed; and
S5. the transmitting-end magnetic core after the grinding is sprayed with an insulating layer, wherein a thickness of the insulating layer is 20 µm.

It should be noted that, in another example, the height of the green body 5 in S2 may be any other value within 5.5 mm-8 mm; if the height of the green body 5 is lower than 5.5 mm, there will be a risk that the green body 5 may be deformed after the sintering, leading to a large deviation of H₂; if the height of the green body 5 is higher than 8.00 mm, the grinding amount will increase, resulting in a waste of raw materials. The thickness of the insulating layer in S5 may be any other value within 5 µm-35 µm, which is specifically depended on the actual needs; if the thickness of the insulating layer is lower than 5 µm, the insulating layer will fail to serve the purpose of insulation; if the thickness of the insulating layer is higher than 35 µm, the thickness of the insulating layer will be overly large and affect the overall aesthetics.

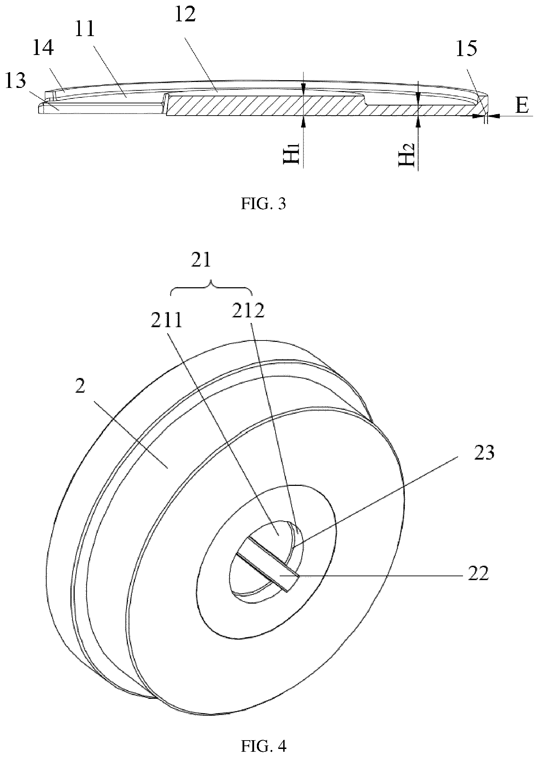

As shown in FIGS. 4 -7, the design mold of this example comprises a female mold 2, an upper mold 3 and a lower mold 4; a through slot 21 and a positioning slot 22 are defined in the female mold 2 and are both extending along the axial direction of the female mold 2; a lower end of the upper mold 3 is placed into the through slot 21 and is provided with a first positioning protrusion 31 corresponding to the positioning slot 22, a center post recess 32 used to form the coil-winding center post 12, a coil-winding protrusion 33 used to form the coil-winding slot 13, and a forming recess 34 to form the outer wall 14; and an upper end of the lower mold 4 is placed into the through slot 21 and is provided with a center protrusion 41, and a second positioning protrusion 42 corresponding to the positioning slot 22, and the lower mold 4, the upper mold 3 and the female mold 2 enclose a mold cavity for the formation of the green body 5, and a height of the center protrusion 41 is 2.05 mm. In another example, the height of the center protrusion 41 may be any other value within 1.5 mm-4.14 mm to control the molding density of the coil-winding center post 12 of the green body 5; if the height of the center protrusion 41 is higher than 4.14 mm, the coil-winding center post 12 of the green body 5 will be higher than the outer wall 14, and an extra cutter will be needed to grind the coil-winding center post 12 during the grinding process; if the height of the center protrusion 41 is lower than 1.5 mm, the density of the coil-winding center post 12 will be low, ultimately resulting in excessive shrinkage and thereby deformation of the coil-winding center post 12.

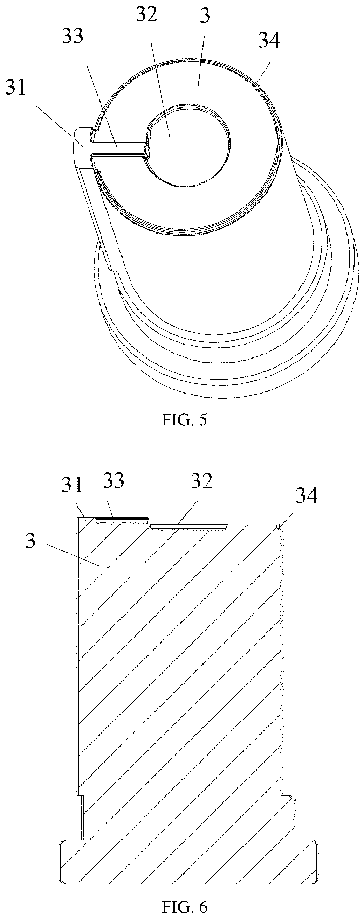

It should be noted that, as shown in FIGS. 5-6, an end-face of the first positioning protrusion 31 of the upper mold 3 of this example is horizontally aligned with an end-face of the coil-winding protrusion 33, and the first positioning protrusion 31 and an end-face of the upper mold 3 are connected with a smooth transition, because of which the end-face and the side-face of the finally obtained magnetic core body 11 can be joined smoothly.

In order to ensure the accuracy of the measurement, 16 detecting points are employed to detect H₂ in this example. Specifically, two detecting points are selected at every interval of 45° in the radial direction of the magnetic core body 11 to detect the thickness of the magnetic core body 11; if the difference of the thicknesses at all the detecting points is between -0.1 mm and 0.1 mm, it is initially determined that the product meets the requirements.

In S5, after the ground transmitting-end magnetic core is sprayed with the insulating layer, a thickness of the insulating layer is required to be detected, and for the detection, four detecting points are selected at equal intervals in the diameter direction of the transmitting-end magnetic core, and five detecting points are selected at equal intervals in the diameter direction of the magnetic core body 11 for the detection.

In this example, a depth A of the forming recess 34 is equal to a depth B of the center post recess 32. In another example, A may be greater than B and the difference between those two is not less than 1 mm. A height C of the coil-winding protrusion 33 is not less than the product of the thickness of the magnetic core body 11 after the grinding and the mold shrinkage ratio n and the difference between those two is less than or equal to 0.6 mm, i.e., 0≤C-H₂*n≤0.6 mm; in this example, C is 1.5285 mm, and the mold shrinkage ratio n is the shrinkage ratio of the green body 5 processed into a sintered body. If C-H₂*n is less than 0, the coil-winding slot 13 cannot be straight and through; if C-H₂*n is greater than 0.6 mm, in the measurement of H₂, the thickness at the detecting points located on either side of the coil-winding slot 13 among the 16 detecting points will exceeds the upper limit, reducing the yield rate of the transmitting-end magnetic core.

In this example, a first draft angle formed by a side wall of the center post recess 32 with the vertical plane is 8°, and a second draft angle formed by a side wall of the forming recess 34 with the vertical plane is 4°. In another example, the first draft angle may be 4°-10°, and the second draft angle may be 2°-8°. If the first draft angle and the second draft angle are lower than the lower limit values of the angular ranges, the phenomenon of unsmooth mold releasing, corner missing, or cracking may occur; if the first draft angle and the second draft angle are higher than the upper limit values of the angular ranges, the draft angle will be visibly and overly large, affecting the size of the transmitting-end magnetic core. Therefore, the first draft angle and the second draft angle should be determined according to the actual needs.

In this example, the chamfer 15 is circumferentially disposed at the edge of the magnetic core body 11 on the side facing away the coil-winding center post 12, and the chamfer 15 is disposed opposite to the outer wall 14; the through slot 21 comprises a first connecting slot 211 and a second connecting slot 212, a diameter of the second connecting slot 212 is less than a diameter of the first connecting slot 211, the lower end of the upper mold 3 is placed into the first connecting slot 211, the upper end of the lower mold 4 is placed into the second connecting slot 212, the first connecting slot 211 and the second connecting slot 212 are connected by a connecting bevel 23, and the connecting bevel 23 is used for forming the chamfer 15. In the example, the angle formed by the connecting bevel 23 with the horizontal plane is an angle of inclination, and the angle of inclination is 45°.

Specifically, in this example, a distance from a bottom end of the connecting bevel 23 to a top end of the mold cavity = (the thickness of the magnetic core body after the grinding + the height of the coil-winding center post + grinding amounts of two end-faces of the sintered body + 0.25) * n. The distance from the bottom end of the connecting bevel 23 to the top end of the mold cavity is defined as a wall height, and the wall height is required to be = (Hi + the grinding amounts of two end-faces of the sintered body + 0.25) * n, where H₁ is the sum of the thickness of the magnetic core body 11 after the grinding and the height of the coil-winding center post 12.

In this example, the difference between a density of the magnetic core body 11 and a density of the coil-winding center post 12 is 0.02 g/cm³. In another example, the difference between the density of the magnetic core body 11 and the density of the coil-winding center post 12 may be any other value less than or equal to 0.03 g/cm³, and if the difference between those two is more than 0.03 g/cm³, the processed transmitting-end magnetic core will be prone to deformation. In this example, a density of a portion of the green body 5, which faces the coli-winding protrusion 33, is 0.11 g/cm³. In another example, the density of the portion of the green body 5, which faces the coli-winding protrusion 33, may be any other value of less than or equal to 0.15 g/cm³; if the difference of those two is greater than 0.15 g/cm³, for the processed transmitting-end magnetic core, the two sides of the magnetic core body 11 will not be parallel in the width direction of the coil-winding slot 13, affecting the aesthetics of the transmitting-end magnetic core or even causing the transmitting-end magnetic core to be a defective product.

After S5, the processed transmitting-end magnetic core are tested in size; if the size of the processed transmitting-end magnetic core meets the requirements, the transmitting-end magnetic core will then be tested for voltage withstanding; the test is carried out with direct current under 35 V and 1 mA for 3 s; if the transmitting-end magnetic core passes the voltage withstanding test, the transmitting-end magnetic core will be determined as a qualified product.

The manufacturing method for the transmitting-end magnetic core provided by this example is characterized by simple process and high yield rate; specifically, the yield rate of the transmitting-end magnetic core manufactured by the manufacturing method for the transmitting-end magnetic core provided by this example is 86%, which is much higher than the 72% in the art.

### Example 2

The transmitting-end magnetic core of this example differs from Example 1 in that, in this example, the outer diameter of the transmitting-end magnetic core is 42.8 mm, the thickness of the outer wall 14 is 1.05 mm, the width D of the coil-winding slot 13 is 2.96 mm, and the sum H₁ of the thickness of the magnetic core body 11 and the height of the coil-winding center post 12 is 2.1 mm.

For the design mold, the height of the connecting bevel 23 is 0.5 mm, B of the upper mold 3 is equal to A-0.3, C is 1.4285, the first draft angle is 6°, the second draft angle is 6°, the height of the center protrusion 41 of the lower mold 4 is 3.1 mm, the height of the green body is 7 mm, the wall height is 3.2175 mm, the difference between the density of the magnetic core body 11 and the density of the coil-winding center post 12 is 0.03 g/cm³, the density of the portion of the green body 5, which faces the coil-winding protrusion 33, is 0.14 g/cm³, and the thickness of the coating is 15 µm. It is known after testing that the final processed transmitting-end magnetic core is a qualified product.

### Example 3

The transmitting-end magnetic core of this example differs from Example 1 in that, in this example, the outer diameter of the transmitting-end magnetic core is 48.2 mm, the thickness of the outer wall 14 is 0.95 mm, the width D of the coil-winding slot 13 is 2.35 mm, the sum H₁ of the thickness of the magnetic core body 11 and the height of the coil-winding center post 12 is 1.95 mm, and the thickness H₂ of the magnetic core body 11 is 0.95 mm.

For the design mold, the angle of inclination of the connecting bevel 23 for the female mold 2 is 30°, the height of the connecting bevel 23 is 0.6 mm, B of the upper mold 3 is equal to A-0.2, C is 1.6115, the first draft angle is 9°, the second draft angle is 7°, the height of the center protrusion 41 of the lower mold 4 is 3.8 mm, the height of the green body 5 is 8 mm, the wall height is 2.8665 mm, the density of the portion of the green body 5, which faces the coil-winding protrusion 33, is 0.13 g/cm³, and the thickness of the coating is 12 µm. It is known after testing that the final processed transmitting-end magnetic core is a qualified product.

### Example 4

The transmitting-end magnetic core of this example differs from Example 1 in that, in this example, the outer diameter of the transmitting-end magnetic core is 28 mm, the thickness of the outer wall 14 is 0.8 mm, the width D of the coil-winding slot 13 is 2.2 mm, the sum H₁ of the thickness of the magnetic core body 11 and the height of the coil-winding center post 12 is 1.65 mm, and the thickness H₂ of the magnetic core body 11 is 0.8 mm.

For the design mold, the angle of inclination of the connecting bevel 23 for the female mold 2 is 60°, the height of the connecting bevel 23 is 0.25 mm, C of the upper mold 3 is 1.136, the first draft angle is 10°, the second draft angle is 2°, the height of the center protrusion 41 of the lower mold 4 is 1.8 mm, the height of the green body 5 is 7.5 mm, the wall height is 2.6325 mm, the difference between the density of the magnetic core body 11 and the density of the coil-winding center post 12 is 0.01 g/cm³, the density of the portion of the green body 5, which faces the coil-winding protrusion 33, is 0.09 g/cm³, and the thickness of the coating is 15 µm. It is known after testing that the final processed transmitting-end magnetic core is a qualified product.

### Example 5

The transmitting-end magnetic core of this example differs from Example 1 in that, in this example, the outer diameter of the transmitting-end magnetic core is 25.3 mm, the thickness of the outer wall 14 is 0.9 mm, the width D of the coil-winding slot 13 is 3.25 mm, the sum H₁ of the thickness of the magnetic core body 11 and the height of the coil-winding center post 12 is 1.85 mm, and the thickness H₂ of the magnetic core body 11 is 0.9 mm.

For the design mold, the angle of inclination of the connecting bevel 23 for the female mold 2 is 40°, the height of the connecting bevel 23 is 0.55 mm, B of the upper mold 3 is equal to A-0.1, C is 1.353, the first draft angle is 8°, the second draft angle is 4°, the height of the center protrusion 41 of the lower mold 4 is 2.9 mm, the height of the green body 5 is 6 mm, and the wall height is 2.808 mm; the difference between the density of the magnetic core body 11 and the density of the coil-winding center post 12, the density of the portion of the green body 5 which faces the coil-winding protrusion 33, and the thickness of the coating are the same as in Example 1. It is known after testing that the final processed transmitting-end magnetic core is a qualified product.

### Example 6

The transmitting-end magnetic core of this example differs from Example 1 in that, in this example, the outer diameter of the transmitting-end magnetic core is 32.9 mm, the thickness of the outer wall 14 is 1 mm, the width D of the coil-winding slot 13 is 3.12 mm, the sum H₁ of the thickness of the magnetic core body 11 and the height of the coil-winding center post 12 is 1.68 mm, and the thickness H₂ of the magnetic core body 11 is 0.85 mm.

For the design mold, the angle of inclination of the connecting bevel 23 for the female mold 2 is 35°, the height of the connecting bevel 23 is 0.8 mm, B of the upper mold 3 is equal to A, C is 1.2945, the first draft angle is 6°, the second draft angle is 6°, the height of the center protrusion 41 of the lower mold 4 is 4 mm, the height of the green body 5 is 7 mm, the wall height is 2.6091 mm, the difference between the density of the magnetic core body 11 and the density of the coil-winding center post 12 is 0.03 g/cm³, the density of the portion of the green body 5, which faces the coil-winding protrusion 33, is 0.14 g/cm³, and the thickness of the coating is 15 µm. It is known after testing that the final processed transmitting-end magnetic core is a qualified product.

### Example 7

The transmitting-end magnetic core of this example differs from Example 1 in that, in this example, the outer diameter of the transmitting-end magnetic core is 50.48 mm, the thickness of the outer wall 14 is 1.05 mm, the width D of the coil-winding slot 13 is 2.94 mm, the sum H₁ of the thickness of the magnetic core body 11 and the height of the coil-winding center post 12 is 1.84 mm, and the thickness H₂ of the magnetic core body 11 is 0.95 mm.

For the design mold, the angle of inclination of the connecting bevel 23 for the female mold 2 is 45°, the height of the connecting bevel 23 is 0.8 mm, B of the upper mold 3 is equal to A, C is 1.4115, the first draft angle is 9°, the second draft angle is 7°, the height of the center protrusion 41 of the lower mold 4 is 4.14 mm, the height of the green body 5 is 8 mm, the wall height is 2.7963 mm, the difference between the density of the magnetic core body 11 and the density of the coil-winding center post 12 is 0.02 g/cm³, the density of the portion of the green body 5, which faces the coil-winding protrusion 33, is 0.13 g/cm³, and the thickness of the coating is 12 µm. It is known after testing that the final processed transmitting-end magnetic core is a qualified product.

### Example 8

The transmitting-end magnetic core of this example differs from Example 1 in that, in this example, the outer diameter of the transmitting-end magnetic core is 45.24 mm, the thickness of the outer wall 14 is 0.82 mm, the width D of the coil-winding slot 13 is 2.44 mm, the sum H₁ of the thickness of the magnetic core body 11 and the height of the coil-winding center post 12 is 1.95 mm, and the thickness H₂ of the magnetic core body 11 is 0.98 mm.

For the design mold, the angle of inclination of the connecting bevel 23 for the female mold 2 is 55°, the height of the connecting bevel 23 is 0.38 mm, B of the upper mold 3 is equal to A-0.3, C is 1.4466, the first draft angle is 10°, the second draft angle is 2°, the height of the center protrusion 41 of the lower mold 4 is 3.06 mm, the height of the green body 5 is 7.5 mm, the wall height is 2.925 mm, the difference between the density of the magnetic core body 11 and the density of the coil-winding center post 12 is 0.01 g/cm³, the density of the portion of the green body 5, which faces the coil-winding protrusion 33, is 0.09 g/cm³, and the thickness of the coating is 15 µm. It is known after testing that the final processed transmitting-end magnetic core is a qualified product.

### Example 9

The transmitting-end magnetic core of this example differs from Example 1 in that, in this example, the outer diameter of the transmitting-end magnetic core is 42.88 mm, the thickness of the outer wall 14 is 0.78 mm, the width D of the coil-winding slot 13 is 2 mm, the sum H₁ of the thickness of the magnetic core body 11 and the height of the coil-winding center post 12 is 2.05 mm, and the thickness H₂ of the magnetic core body 11 is 1.08 mm.

For the design mold, the angle of inclination of the connecting bevel 23 for the female mold 2 is 60°, the height of the connecting bevel 23 is 0.2 mm, B of the upper mold 3 is equal to A-0.2, C is 1.5636, the first draft angle is 8°, the second draft angle is 4°, the height of the center protrusion 41 of the lower mold 4 is 2.1 mm, the height of the green body 5 is 6 mm, the wall height is 3.042 mm, the difference between the density of the magnetic core body 11 and the density of the coil-winding center post 12 is 0.02 g/cm³, the density of the portion of the green body 5, which faces the coil-winding protrusion 33, is 0.11 g/cm³, and the thickness of the coating is 20 µm. It is known after testing that the final processed transmitting-end magnetic core is a qualified product.

### Example 10

The transmitting-end magnetic core of this example differs from Example 1 in that, in this example, the outer diameter of the transmitting-end magnetic core is 35.5 mm, the thickness of the outer wall 14 is 0.7 mm, the width D of the coil-winding slot 13 is 2.15 mm, the sum H₁ of the thickness of the magnetic core body 11 and the height of the coil-winding center post 12 is 2 mm, and the thickness H₂ of the magnetic core body 11 is 1.1 mm.

For the design mold, the angle of inclination of the connecting bevel 23 for the female mold 2 is 58°, the height of the connecting bevel 23 is 0.9 mm, B of the upper mold 3 is equal to A, C is 1.587, the first draft angle is 6°, the second draft angle is 6°, the height of the center protrusion 41 of the lower mold 4 is 4.02 mm, the height of the green body 5 is 7 mm, the wall height is 2.9835 mm, the difference between the density of the magnetic core body 11 and the density of the coil-winding center post 12 is 0.03 g/cm³, the density of the portion of the green body 5, which faces the coil-winding protrusion 33, is 0.14 g/cm³, and the thickness of the coating is 15 µm. It is known after testing that the final processed transmitting-end magnetic core is a qualified product.

### Example 11

The transmitting-end magnetic core of this example differs from Example 1 in that, in this example, the outer diameter of the transmitting-end magnetic core is 47.8 mm, the thickness of the outer wall 14 is 0.74 mm, the width D of the coil-winding slot 13 is 2.42 mm, the sum H₁ of the thickness of the magnetic core body 11 and the height of the coil-winding center post 12 is 1.98 mm, and the thickness H₂ of the magnetic core body 11 is 1.04 mm.

For the design mold, the angle of inclination of the connecting bevel 23 for the female mold 2 is 32°, the height of the connecting bevel 23 is 0.6 mm, B of the upper mold 3 is equal to A-0.1, C is 1.5168, the first draft angle is 9°, the second draft angle is 7°, the height of the center protrusion 41 of the lower mold 4 is 3.85 mm, the height of the green body 5 is 8 mm, the wall height is 2.9601 mm, the difference between the density of the magnetic core body 11 and the density of the coil-winding center post 12 is 0.02 g/cm³, the density of the portion of the green body 5, which faces the coil-winding protrusion 33, is 0.13 g/cm³, and the thickness of the coating is 12 µm. It is known after testing that the final processed transmitting-end magnetic core is a qualified product.

### Example 12

The transmitting-end magnetic core of this example differs from Example 1 in that, in this example, the outer diameter of the transmitting-end magnetic core is 44.2 mm, the thickness of the outer wall 14 is 1.02 mm, the width D of the coil-winding slot 13 is 2.76 mm, the sum H₁ of the thickness of the magnetic core body 11 and the height of the coil-winding center post 12 is 1.68 mm, and the thickness H₂ of the magnetic core body 11 is 0.98 mm.

For the design mold, the angle of inclination of the connecting bevel 23 for the female mold 2 is 46°, the height of the connecting bevel 23 is 0.48 mm, B of the upper mold 3 is equal to A, C is 1.4466, the first draft angle is 10°, the second draft angle is 2°, the height of the center protrusion 41 of the lower mold 4 is 1.5 mm, the height of the green body 5 is 7.5 mm, the wall height is 2.6091 mm, the difference between the density of the magnetic core body 11 and the density of the coil-winding center post 12 is 0.01 g/cm³, the density of the portion of the green body 5, which faces the coil-winding protrusion 33, is 0.09 g/cm³, and the thickness of the coating is 15 µm. It is known after testing that the final processed transmitting-end magnetic core is a qualified product.

It should be noted that the foregoing description is only preferred examples and technical principles of the present application. Those skilled in the art will understand that the present application is not limited to the particular examples herein, and those skilled in the art can make various obvious variations, readjustments, and substitutions without departing from the protection scope of the present application. Therefore, although the present application is illustrated in detail through the above examples, the present application is not limited to the above examples, which may include many other equivalent examples without departing from the concept of the present application, and the scope of the present application is defined by the scope of the appended claims.

## Claims

1. A transmitting-end magnetic core, comprising a magnetic core body (11), the magnetic core body (11) has a flat disc structure; a coil-winding center post (12) which is disposed on an end-face of one side of the magnetic core body (11), the coil-winding center post (12) is used for winding an induction coil; a coil-winding slot (13) which is disposed through the magnetic core body (11), one end of the coil-winding slot (13) is positioned on the coil-winding center post (12) or the magnetic core body (11), and the other end passes through an edge of the magnetic core body (11); an outer wall (14) which is circumferentially disposed at the edge of the magnetic core body (11) on the end-face of the same side where the coil-winding center post (12) is disposed, at least one of two ends of the outer wall (14) around the magnetic core body (11) is spaced apart from the coil-winding slot (13), and the end-face and a side-face of the magnetic core body (11) are joined smoothly.

2. The transmitting-end magnetic core according to claim 1, wherein a chamfer (15) is circumferentially disposed at the edge of the magnetic core body (11) on a side facing away the coil-winding center post (12), and the chamfer (15) is disposed opposite to the outer wall (14).

3. A manufacturing method for the transmitting-end magnetic core according to any one of claims 1 to 2, comprising:
S1. determining a mold shrinkage ratio n with a design mold for the transmitting-end magnetic core by using a pressing method where the coil-winding center post (12) of the transmitting-end magnetic core is arranged with the face upwards;
S2. pressing powders to form a green body (5), wherein a height of the green body (5) is 5.5 mm-8 mm;
S3. sintering the green body (5) in a furnace to form a sintered body; and
S4. grinding the sintered body on a grinder; wherein during the grinding, firstly, a height of the coil-winding center post (12) is allowed to reach a first preset height through grinding, and then a sum of the height of the coil-winding center post (12) and a thickness of the magnetic core body (11) is allowed to reach a second preset height through grinding, and at the same time, the thickness of the magnetic core body (11) is allowed to reach a third preset height through grinding, wherein the first preset height, the second preset height and the third preset height are the corresponding heights of the transmitting-end magnetic core to be processed.

4. The manufacturing method for the transmitting-end magnetic core according to claim 3, wherein after S4, the transmitting-end magnetic core after the grinding is sprayed with an insulating layer, and a thickness of the insulating layer is 5 µm-35 µm.

5. The manufacturing method for the transmitting-end magnetic core according to claim 3, wherein the design mold comprises:
a female mold (2), wherein a through slot (21) and a positioning slot (22) are defined in the female mold (2) and are both extending along the axial direction of the female mold (2);
an upper mold (3), wherein a lower end of the upper mold (3) is placed into the through slot (21) and is provided with a first positioning protrusion (31) corresponding to the positioning slot (22), a center post recess (32) used to form the coil-winding center post (12), a coil-winding protrusion (33) used to form the coil-winding slot (13), and a forming recess (34) to form the outer wall (14); and
a lower mold (4), wherein an upper end of the lower mold (4) is placed into the through slot (21) and is provided with a center protrusion (41), and a second positioning protrusion (42) corresponding to the positioning slot (22), and the lower mold (4), the upper mold (3) and the female mold (2) enclose a mold cavity for the formation of the green body (5), and a height of the center protrusion (41) is 1.5 mm-4.14 mm.

6. The manufacturing method for the transmitting-end magnetic core according to claim 5, wherein a depth of the forming recess (34) is not less than a depth of the center post recess (32) and the difference between those two is not less than 1 mm, and a height of the coil-winding protrusion (33) is not less than the product of the thickness of the magnetic core body (11) after the grinding and the mold shrinkage ratio and the difference between those two is less than or equal to 0.6 mm.

7. The manufacturing method for the transmitting-end magnetic core according to claim 6, wherein the chamfer (15) is circumferentially disposed at the edge of the magnetic core body (11) on the side facing away the coil-winding center post (12), the chamfer (15) is disposed opposite to the outer wall (14), the through slot (21) comprises a first connecting slot (211) and a second connecting slot (212), a diameter of the second connecting slot (212) is less than a diameter of the first connecting slot (211), the lower end of the upper mold (3) is placed into the first connecting slot (211), the upper end of the lower mold (4) is placed into the second connecting slot (212), the first connecting slot (211) and the second connecting slot (212) are connected by a connecting bevel (23), and the connecting bevel (23) is used for forming the chamfer (15).

8. The manufacturing method for the transmitting-end magnetic core according to claim 7, wherein a distance from a bottom end of the connecting bevel (23) to a top end of the mold cavity = (the thickness of the magnetic core body after the grinding + the height of the coil-winding center post + grinding amounts of two end-faces of the sintered body + 0.25) * n.

9. The manufacturing method for the transmitting-end magnetic core according to claim 6, wherein a first draft angle formed by a side wall of the center post recess (32) with the vertical plane is 4°-10°, and a second draft angle formed by a side wall of the forming recess (34) with the vertical plane is 2°-8°.

10. The manufacturing method for the transmitting-end magnetic core according to claim 5, wherein the difference between a density of the magnetic core body (11) and a density of the coil-winding center post (12) is less than or equal to 0.03 g/cm³, and a density of a portion of the green body (5), which faces the coli-winding protrusion (33), is less than or equal to 0.15 g/cm³.
